# EUROPEAN PATENT SPECIFICATION

(11) **EP 2 811 479 B1**
(45) Date of publication and mention of the grant of the patent: **02.08.2017**
(21) Application number: 13171086.5
(22) Date of filing: 07.06.2013
(51) Int. Cl.: G09B 23/28

(54) **A user interface for a surgical simulation system**
Benutzeroberfläche für ein chirurgisches Simulationssystem
Interface utilisateur pour un système de simulation d'opération chirurgicale

(43) Date of publication of application: 10.12.2014
(73) Proprietor: Surgical Science Sweden AB, 413 14 Göteborg (SE)
(72) Inventor: Larsson, Anders, 431 59 Mölndal (SE); Johansson, Christer, 424 71 Olofstorp (SE); Nyström, Mattias, 412 65 Göteborg (SE)
(74) Representative: Awapatent AB

(56) References cited:
- WO-A1-02/37452
- WO-A1-97/19440
- WO-A1-2009/008750
- GB-A- 2 252 656

## Description

### Field of the invention

The present invention relates generally to a user interface device for a surgical simulation system, and more specifically to an interface for a camera simulator.

### Background of the invention

In recent years, systems for surgical simulations have become increasingly more used, in order to train physicians various surgical procedures without putting live patients at risk. In particular in the field of minimally-invasive surgery, such as laparoscopy, endoscopy, colonoscopy, etc., such simulation systems have gained significant acceptance. During minimal-invasive surgery the physician typically relies on an image on a screen rather than on an actual view of the patient, and with powerful image rendering available today, such an image can be simulated with a very high degree of realism.

During actual surgery this image is provided by a camera. The optics of such a camera is commonly mounted on the chamfered end of a shaft to enable a field of view that can cover areas that are obstructed from a direct line of sight from the entry point. Alternatively the whole camera can be mounted on the chamfered end of the shaft. The shaft may be rotated to give a more preferred field of view. However, as the shaft rotates the view consequently rotates relative the surgical instruments, or rather relative the surgeon, which may unnecessarily make the surgery more difficult. One solution to this problem is to provide an image sensor which is rotatable in the camera, for example in a handle on the opposite side of the shaft from the optics, which handle is rotatable relative the shaft and the optics.

During surgical simulation, in order to interact with the simulation software, the simulation system further requires input devices, i.e. hardware which the physician may operate and which simulates an actual surgical instrument. Such input devices should in physical appearance and function resemble an actual instrument. It has become clear that there is also a need for an input device which realistically simulates the camera.

In the case of for example the Camera Instrument, developed by G-Coder Systems AB, this device includes a rigid shaft, corresponding to for example a rod lens system to be inserted into a patient, and a handle, with which the physician can move the camera. In order to simulate the degrees of freedom of an actual laparoscope, which passes into a patient body through a small opening, the shaft is pivotably supported by a ball joint of a fixed frame. In addition, the shaft can be translated in linear motion along its longitudinal axis, i.e. in and out of a simulated body, as well as rotated around this longitudinal axis. The handle further includes a turnable portion, allowing the physician to rotate a simulated image sensor, and several buttons and wheels for controlling the simulation software's zoom, focus, lock, etc. The Camera Instrument and frame contains sensors for all degrees of freedom including rotation of the shaft and rotational portion.

Rotational sensors are generally considered convenient for detection of relative rotational movement between the shaft of an instrument and a suspension portion such as a ball joint. According to a simple solution, a rotational sensor is arranged coaxially with an axis to detect rotation around this axis. However, in some applications, such as camera applications, rotation around the axis must be detected with high accuracy, and conventional, sufficiently small and inexpensive rotational sensors, such as optical sensors, do not provide satisfactory resolution for such applications.

Larger sensors would improve the resolution, but would lead to a larger and bulky pivoting joint. Another option is to increase the resolution of the sensor by means of some kind of transmission, e.g. to arrange the sensor on a roller in engagement with a gear wheel arranged around the axis. If the gear wheel is larger than the roller, one revolution around the axis will lead to multiple rotations of the roller and sensor. However, also this solution requires relatively much space, leading to a bulky design.

### General disclosure of the invention

It is an object of the present invention to overcome the problems mentioned above, and enable high resolution rotational detection using an inexpensive rotational sensor.

According to the present invention, this and other objects are achieved by a user interface device for a surgical simulation system, which interface comprises a frame having a support and a suspension portion rotatable around a first axis in relation to the support, an instrument having a rigid shaft with a primary extension along a longitudinal axis non-parallel to the first axis, the shaft being suspended by the suspension portion so as to be translatable along the longitudinal axis in relation to the suspension portion, and a first rotational sensor arranged to detect rotation of the suspension portion around the first axis with respect to the support. The interface device further comprises a guiding surface arranged at a distance from the first axis, and fixed in relation to the support, and a first roller arranged between the first axis and the guiding surface. The first roller is frictionally engaged with the guiding surface, so as to rotate when the suspension portion is rotated around the first axis with respect to the support, wherein the first rotational sensor is arranged to detect rotation of the first roller.

The invention is particularly useful for non-haptic instruments, such as a camera simulator, typically having no force feedback, but may be advantageous also for other types of instruments.

By arranging the guiding surface radially outside the roller with respect to the first axis, the available space is used optimally to achieve improved resolution. The invention thus allows the use of small sensors (with relatively low resolution) and a small overall size of the pivoting joint, while still providing satisfactory resolution.

The limited size of the suspension portion is particularly advantageous in an application where it is desirable to house the pivoting joint, i.e. the suspension portion and its attachment to the support, in a closed cover. According to the invention, the guiding surface is formed by an inner surface of a part of the cover which is integrated in the support.

The first roller may be arranged on a first lever which is spring loaded against the guiding surface. Such an arrangement will ensure sufficient friction between the roller and the surface.

According to one embodiment, a second roller is frictionally engaged with the rigid shaft so as to rotate when the rigid shaft is translated along the longitudinal axis with respect to the suspension portion, and a second rotational sensor is arranged to detect rotation of the second roller. By this arrangement, detection of two degrees of freedom are detected in a relatively limited space. Also the second roller may be arranged on a spring loaded lever.

The rigid shaft may be fixed in relation to said suspension portion with respect to rotation around the longitudinal axis. Such a design eliminates the need for yet another sensor in the suspension portion, requiring additional space. Also, it is difficult to detect rotation of a shaft around an axis and at the same time detect translation of the same shaft along the same axis. If the shaft is fixed with respect to rotation around the longitudinal axis, rotation of a handle of the camera instrument is preferably provided in the handle.

### Brief description of the drawings

The present invention will be described in more detail with reference to the appended drawings, showing currently preferred embodiments of the invention.
Figure 1 is a schematic view of a surgical simulation system with a camera interface device according to an embodiment of the invention.
Figure 2 is a schematic and partly exploded view of the camera interface device in figure 1.
Figure 3 is a schematic view of the suspension portion in figure 2.
Figure 4 is a cross-sectional view of the handle in figure 2.

### Detailed description of preferred embodiments

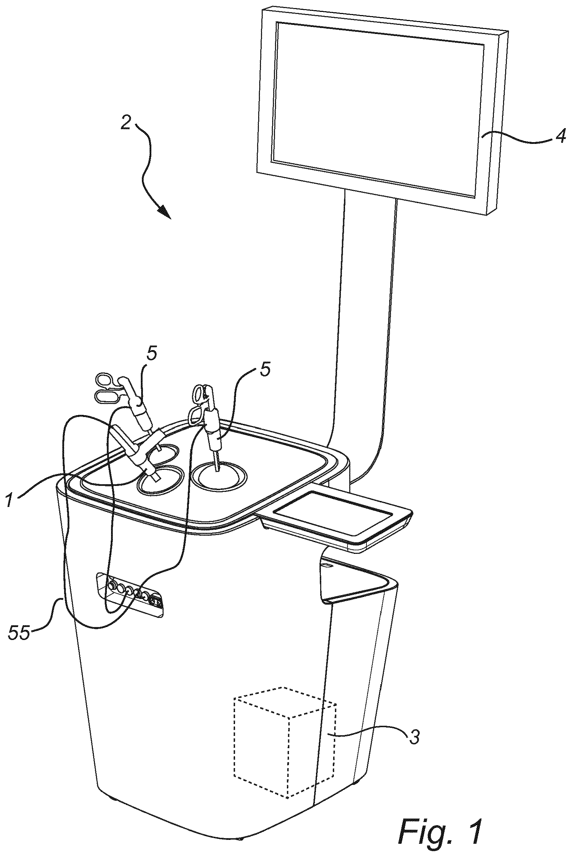

Figure 1 shows a simulation system 2 implementing a user interface device 1 according to an embodiment of the present invention. A user interface device according to the present invention may be implemented in many other types of simulation systems, including non-surgical simulation systems. In the illustrated case, the simulation system 2 is a surgical simulation system and comprises a processing unit 3 running simulation software for simulating a surgical procedure, and a display 4 for displaying a visualization of the simulated procedure to a user. The system further has three user interface devices 1, 5 connected to the processing unit 3. Two of these, 5, are adapted to simulate surgical instruments operated by a physician inside a human body. The third interface device 1 is adapted to simulate a camera provided inside the human body, and arranged to acquire visual output from the surgical procedure, In use, the three interfaces are used by a user, typically a physician training for a particular surgical procedure, to interact with the simulation running in the processing unit 3 and visualized on the display device 4. In particular, the visual output displayed on the display 4 will depend on the position and orientation of the camera interface device 1.

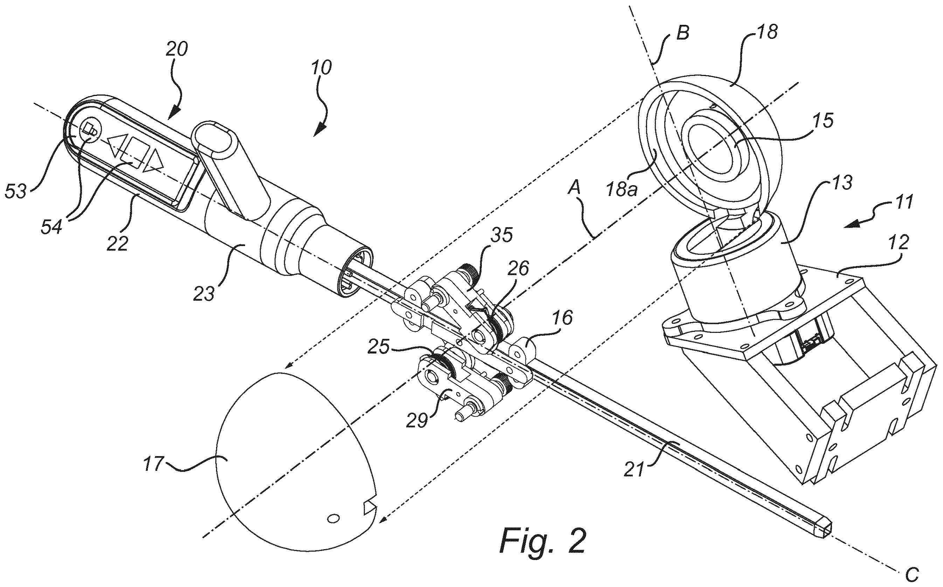

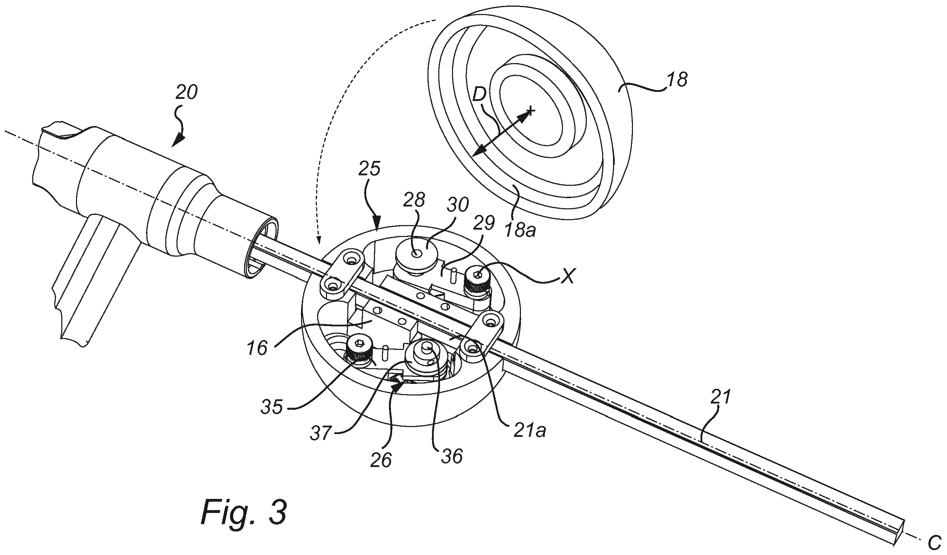

Figure 2 and 3 very schematically show some parts of the camera interface device 1 in figure 1, in order to illustrate the various degrees of freedom of the interface. The camera instrument 10 essentially comprises a handle 20 attached to the end of a rigid shaft 21, which is pivotably suspended by a frame 11. The frame 11 allows rotation of the shaft around a first axis A and a second axis B, typically orthogonal to the first axis A.

In the illustrated embodiments, rotation around the second axis B is provided by a support 15 rotationally mounted to a stationary base 12 of the frame 11 by a suitable bearing 13. A rotation sensor (not shown) is provided to detect the position of the support 15 in relation to the base 12. The sensor may for example be a rotational encoder integrated in the base 12, and arranged to detect rotation.

The shaft 21 of the instrument 10 is slidably suspended by a suspension portion 16, which is rotatably mounted on the rotatable support 15 so as to be rotatable around axis A. The suspension portion 16 is arranged in a semi-spherical cover 17, adapted to fit snugly with a similar cover 18 fixed to the support 15.

Primarily with reference to figure 3, a sensor arrangement is provided in the housing 17. The sensor arrangement here comprises a first sensor 25 to detect rotation of the suspension portion 16 in relation to the support 15 around axis A, and a second sensor 26 to detect translation of the shaft 21 in relation to the suspension portion 16.

The first sensor 25 is here a rotation sensor, such as an optic or magnetic sensor. The sensor has an encoder (not visible in figure 3), and an encoding member, such as a disc, coupled to a pin 28 rotatable with respect to the encoder. Relative rotation of the pin 28 can be detected by the encoder, and results in a sensor signal indicative of the rotation. The encoder is arranged on a lever 29 which is pivotally attached to a mounting point X and is spring loaded against a guiding surface 18a, which is fixed in relation to the support 15. The guiding surface 18a is here formed by an inner surface 18a of the cover 18. A roller 30 is fixed to the pin 28, and is brought into frictional contact with the guiding surface 18a. If preferred, the guiding surface 18a and the roller may have structured engaging surfaces, to increase friction.

Upon rotation of the suspension portion 16 with respect to the support 15, the roller 30 will rotate along the surface 18a, and rotation of the pin 28 is detected by the encoder. The sensor 25 thus generates a first sensor signal indicative of rotation of the suspension portion 16 with respect to the support 15. As the inner surface 18a is separated from the axis by a distance D, the encoder will rotate several turns during one revolution of the suspension portion, and resolution of the detection is increased.

The sensor 25 may be in electric contact with suitable circuitry (not shown), from which the first sensor signal can be outputted to the processing unit 3.

The second sensor 26 may be a rotation sensor similar to the first sensor 25, with an encoder (not visible) mounted on a similar spring loaded lever 35. The pin 36 of the second encoder 26 is fixed to a roller 37, which is brought in frictional contact with a surface 21 a of the shaft 21.

Upon translation of the shaft 21 with respect to the suspension portion 16, the roller 37 will rotate, and cause the second sensor 26 to generate a second sensor signal indicative of the translation. Also the second sensor 26 may be in electric contact with suitable circuitry (not shown).

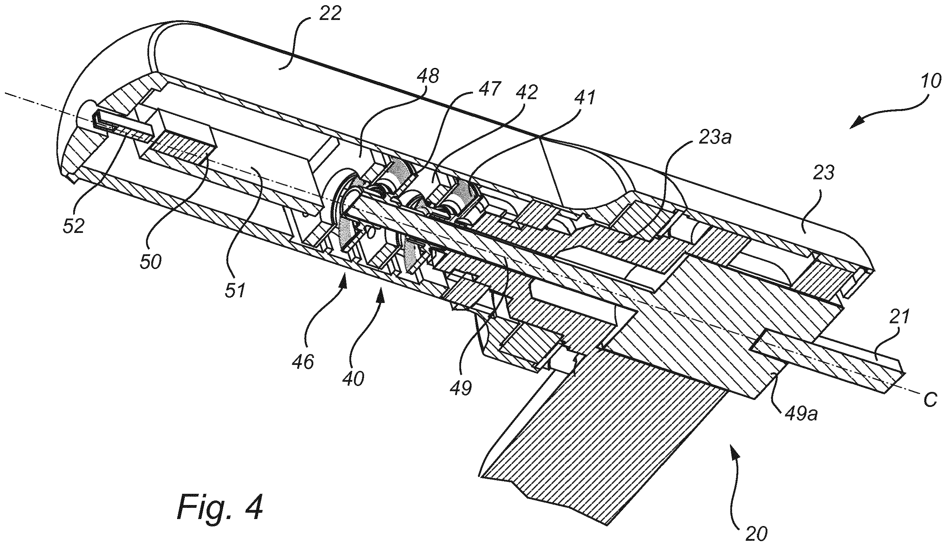

Turning now to figure 4, the handle 20 has a sensor body 22 and a rotator sleeve 23 which are both rotatably connected to the shaft 21 around the longitudinal axis C. The rotator sleeve has a grip portion and is intended to be used by a user to rotate the instrument 10. As the shaft 21 is fixed with respect to the frame, rotation of the instrument 10 here means rotation of the rotator sleeve with respect to the shaft. The sleeve 23 and the sensor body 22 are preferably coupled by a certain friction, such that the sensor body will rotate with the rotator sleeve unless subject to external force.

Reference numeral 40 denotes a first rotation sensor, such as an optic or magnetic sensor, which is mounted in the sensor body 22. The first sensor 40 has an encoding member 41, here a disc, and an encoder 42. Relative rotation of the encoder 42 in relation to the disc 41 can be detected, and results in a sensor signal indicative of the rotation. The first sensor 40 is here in electric contact with circuitry 50 on a printed circuit board 51, from which the sensor signal can be outputted via a signal interface 52.

The encoder 42 is fixedly attached to the sensor body 22. The disc 41 is rotationally fixed to the rotator sleeve 23, here by means of a part 23a of the sleeve 23 extending partly into the sensor body 22. Rotation of the sleeve 23 in relation to the sensor body 22 will thus rotate the disc 41 in relation to the encoder 42, and generate a first detection signal available at the signal interface 52.

In addition to the first rotation sensor 40, the arrangement here comprises a second rotation sensor 46, arranged outside the first sensor 40 with respect to the sleeve 23. The second sensor 46 also has a code disc 47 and a encoder 48. The encoder 48 is fixedly arranged in the sensor body 22. The disc 47 is rotationally connected to a torque transfer member 49, arranged coaxially inside the part 23a along the longitudinal axis C of the handle. The member 49 thus extends past the first encoder 40 out of the sensor body 22 and further through the rotator sleeve 23. At its distal end 49a the member 49 is rotationally connected to the rigid shaft 21. The expressions that two parts are "rotationally connected" or "rotationally fixed" are here intended to indicate that when one part is rotated, the other part will also rotate. Therefore, when the sensor body 22 is rotated relative the rigid shaft 21, the disc 47 will rotate with respect to the encoder 48, and the sensor 46 will generate a second detection signal. The second sensor 46 is also in electric contact with the circuitry 50 on the printed circuit board 51, from which the second detection signal can be outputted via the signal interface 52.

Details of the operation of the various parts of the handle, and in particular the sensor body, will now be discussed with reference to figure 4.

Just as in an actual camera, rotation of the instrument 10 should rotate the field of view displayed on the display 4. As the shaft 21 of the interface is fixed with respect to rotation, rotation of the instrument will correspond to rotation of the sleeve 23 (which has the grip portion) with respect to the shaft 21. Relative rotation between the sleeve 23 and the shaft 21 may be retrieved by combining information from the first detection signal from the first sensor 40 (corresponding to relative rotation between the sleeve 23 and the shaft 21) and the second detection signal from the second rotation sensor 46 (corresponding to relative rotation between the sensor body 22 and the shaft 21). As mentioned above, the sensor body 22 and rotator sleeve 23 are preferably coupled by a certain friction, so that they are normally rotated together. Such handle rotation will result in identical signals from the first sensor 40 and the second sensor 46. It is noted that the combination of the sensor signals may be provided by the circuitry 50. Alternatively, the first and second sensor signals are provided unaltered to the processing unit 3, and the combination is provided there.

An actual camera instrument also has the functionality to rotate the image sensor with respect to the instrument, in order to rotate the view rendered on the display 4 essentially without changing the field of view. In the camera interface 1 simulation of such image sensor adjustment may be provided by detecting relative rotation of the sensor body 22 in relation to the sleeve 23. Such rotation is detected directly by the first sensor 40.

With reference to figure 2, reference 53 indicates an example embodiment of the touch sensitive user interfaces. The illustrated user interface 53 has four buttons 54 which are used to control features in the simulation system such as locking the user interface 1, so that the surgical simulation system 2 no longer registers input from the user interface 1 allowing the user to release the interface and to concentrate on other instruments. The other buttons on the user interface 53 may for example control features such as simulated zoom and focus for the image shown on the display 4. The user interface 53 is in electric contact with the circuitry 50 on the printed circuit board 51, from which the input signal can be outputted via a signal interface 52.

Interaction with the user interface 53 will thus generate an interaction signal available at the signal interface 52. The configuration, number or functions of the buttons are by no means limited to this embodiment, further possibilities include a single button or for example a touch sensitive display, which may dynamically display any number of areas representative of functions or menus on the surgical simulation system 2.

With reference to figure 4 the circuitry 50 on the printed circuit board 51 may be capable of converting analog signals from the first sensor 40 and the second sensor 46 to digital signals. For example the circuitry 50 may be adapted to convert the analog signals to provide signals that are representative of the rotation of rotator sleeve 23 relative the shaft 21 and the rotation of sensor body 22 relative the shaft respectively. The circuitry 50 may also convert digital signals from the user interface 53. In one example embodiment the circuitry 50 is adapted to convert the signals to a digital data signal compliant with USB standards. The interface 52 is here connected to the processing unit 3 via a signal line 55 (see figure 1). The connection may alternatively be wireless, e.g. Bluetooth or WiFi.

The person skilled in the art realizes that the present invention by no means is limited to the preferred embodiments described above. On the contrary, many modifications and variations are possible within the scope of the appended claims. For example, other types of sensors and encoders may be used, for detection of rotation as well as translation. For example, hall effect sensors or piezoelectric sensors.

## Claims

1. A user interface device (1) for a surgical simulation system (2), said interface comprising:
a frame (11) having a support (15) and a suspension portion (16) rotatable around a first axis (A) in relation to said support (15),
an instrument (10) having a rigid shaft (21) with a primary extension along a longitudinal axis (C) non-parallel to said first axis (A),
said shaft (21) being suspended by said suspension portion (16) so as to be translatable along said longitudinal axis (C) in relation to said suspension portion (16), and
a first rotational sensor (25) arranged to detect rotation of said suspension portion (16) around said first axis (A) with respect to said support (15),
**characterized by**
a guiding surface (18a) arranged at a distance from said first axis (A), and fixed in relation to said support (15), and
a first roller (30) arranged between said first axis (A) and said guiding surface (18a), said first roller being frictionally engaged with said guiding surface (18a), so as to rotate when said suspension portion (16) is rotated around said first axis (A) with respect to said support (15),
wherein said first rotational sensor (25) is arranged to detect rotation of said first roller (30), and
wherein said support (15) includes a cover (18) arranged to cover said suspension portion (16), wherein said guiding surface (18a) is formed by an inner surface of said cover (18).

2. The interface according to claim 1, wherein said first roller (30) is arranged on a first lever (29) which is spring loaded against said guiding surface (18a).

3. The interface according to any one of the preceding claims, further comprising a second roller (37) frictionally engaged with said rigid shaft (21) so as to rotate when said rigid shaft (21) is translated along said longitudinal axis (C) with respect to said suspension portion (16), and a second rotational sensor (26) arranged to detect rotation of said second roller (37).

4. The interface according to claim 3, wherein said second roller (37) is arranged on a second lever (36) which is spring loaded against said rigid shaft (21).

5. The interface according to any one of the preceding claims, wherein said support (15) is rotatable around a second axis (B) in relation to a fixed base (12) of said frame (11), said second axis (B) being non-parallel to said first axis (A), so that said shaft (21) is pivotable around said second axis (B).

6. The user interface according to any one of the preceding claims, wherein said rigid shaft (21) is fixed in relation to said suspension portion (16) with respect to rotation around said longitudinal axis (C).

7. The user interface according to any one of the preceding claims, wherein said instrument (10) is a camera simulator.

8. The user interface according to claim 7, wherein said cameral interface comprises:
a rigid shaft (21) having a primary extension along a longitudinal axis (C), said rigid shaft being pivotably supported by a frame (11), and movable in relation to said frame in said axial direction, said rigid shaft being fixed in relation to said frame with respect to rotation around said longitudinal axis,
a handle (20) rigidly attached to said rigid shaft (21), having a rotator sleeve (23) rotatable around said longitudinal axis relative said rigid shaft (21), and a sensor body (22) rotatable around said longitudinal axis (C) relative said rigid shaft (21) and said rotator sleeve (23), and said sensor body (22) including:
a first rotation sensor (40) adapted to detect rotation of said rotator sleeve (23) in relation to said sensor body (22),
a second rotation sensor (46) adapted to detect rotation of said sensor body (23) in relation to said rigid shaft (21), and
a signal interface (52) connected to receive a first detection signal from said first rotation sensor (40) and to receive a second detection signal from said second rotation sensor (46).

9. The user interface according to claim 8, further comprising processing circuitry (50) adapted to combine said first sensor signal and said second signal to provide a signal representative of relative rotation between the sleeve (23) and the rigid shaft (21).

10. A surgical simulation system, comprising:
a processing unit (3) for executing simulation software for simulating a surgical procedure,
a display (4) for displaying a visualization of the simulated procedure, and
a user interface (1) according to any one of the preceding claims, connected to said processing unit for allowing a user to interact with the computer simulation visualized in the display.

## Patentansprüche

1. Benutzeroberfläche (1) für ein chirurgisches Simulationssystem (2), wobei die Benutzeroberfläche umfasst:
einen Rahmen (11) mit einem Träger (15) und einem Aufhängungsteil (16), der um eine erste Achse (A) in Bezug auf den Träger (15) drehbar ist,
ein Instrument (10) mit einem starren Schaft (21) mit einer primären Verlängerung entlang einer Längsachse (C), die zur ersten Achse (A) nicht parallel ist,
wobei der Schaft (21) durch den Aufhängungsteil (16) derart aufgehängt ist, dass er entlang der Längsachse (C) in Bezug auf den Aufhängungsteil (16) translatorisch verschiebbar ist, und
einen ersten Drehsensor (25), der eingerichtet ist, die Drehung des Aufhängungsteils (16) um die erste Achse (A) in Bezug auf den Träger (15) zu detektieren,
**gekennzeichnet durch**
eine Führungsfläche (18a), die in einem Abstand von der ersten Achse (A) angeordnet und in Bezug auf den Träger (15) fixiert ist, und
eine erste Rolle (30), die zwischen der ersten Achse (A) und der Führungsfläche (18a) angeordnet ist, wobei die erste Rolle in Reibungseingriff mit der Führungsfläche (18a) steht, um sich so zu drehen, wenn der Aufhängungsteil (16) um die erste Achse in Bezug auf den Träger (15) gedreht wird,
wobei der erste Drehsensor (25) eingerichtet ist, eine Drehung der ersten Rolle (30) zu detektieren, und
wobei der Träger (15) eine Abdeckung (18) aufweist, die eingerichtet ist, den Aufhängungsteil (16) abzudecken, wobei die Führungsfläche (18a) durch eine Innenfläche der Abdeckung (18) gebildet ist.

2. Oberfläche nach Anspruch 1, wobei die erste Rolle (30) auf einem ersten Hebel (29) eingerichtet ist, der gegen die Führungsfläche (18a) federgelagert ist.

3. Oberfläche nach einem der vorhergehenden Ansprüche, ferner umfassend eine zweite Rolle (37), die mit dem starren Schaft (21) in Reibungseingriff steht, um sich so zu drehen, wenn der starre Schaft (21) entlang der Längsachse (C) in Bezug auf den Aufhängungsteil (16) translatorisch verschoben wird, und einen zweiten Drehsensor (26), der eingerichtet ist, die Drehung der zweiten Rolle (37) zu detektieren.

4. Oberfläche nach Anspruch 3, wobei die zweite Rolle (37) auf einem zweiten Hebel (36) eingerichtet ist, der gegen den starren Schaft (21) federgelagert ist.

5. Oberfläche nach einem der vorhergehenden Ansprüche, wobei der Träger (15) um eine zweite Achse (B) in Bezug auf eine fixierte Basis (12) des Rahmens (11) drehbar ist, wobei die zweite Achse (B) nicht parallel zu ersten Achse (A) ist, so dass der Schaft (21) um die zweite Achse (B) schwenkbar ist.

6. Benutzeroberfläche nach einem der vorhergehenden Ansprüche, wobei der starre Schaft (21) in Bezug auf den Aufhängungsteil (16) hinsichtlich einer Drehung um die Längsachse (C) fixiert ist.

7. Benutzeroberfläche nach einem der vorhergehenden Ansprüche, wobei das Instrument (10) ein Kamerasimulator ist.

8. Benutzeroberfläche nach Anspruch 7, wobei die Kameraschnittstelle umfasst:
einen starren Schaft (21) mit einer primären Verlängerung entlang einer Längsachse (C), wobei der starre Schaft schwenkbar von einem Rahmen (11) getragen wird und in Bezug auf den Rahmen in der axialen Richtung bewegbar ist, wobei der starre Schaft in Bezug auf den Rahmen hinsichtlich einer Drehung um die Längsachse fixiert ist,
einen Griff (20), der starr an dem starren Schaft (21) angebracht ist, mit einer Rotatorhülse (23), die um die Längsachse relativ zu dem starren Schaft (21) drehbar ist, und einem Sensorkörper (22), der um die Längsachse (C) relativ zu dem starren Schaft (21) und der Rotatorhülse (23) drehbar ist, und wobei der Sensorkörper (22) umfasst:
einen ersten Drehsensor (40), der eingerichtet ist, eine Drehung der Rotatorhülse (23) in Bezug auf den Sensorkörper (22) zu detektieren,
einen zweiten Drehsensor (46), der eingerichtet ist, eine Drehung des Sensorkörpers (23) in Bezug auf den starren Schaft (21) zu detektieren, und
eine Signalschnittstelle (52), die angeschlossen ist, um ein erstes Detektionssignal von dem ersten Drehsensor (40) zu empfangen und um ein zweites Detektionssignal von dem zweiten Drehsensor (46) zu empfangen.

9. Benutzeroberfläche nach Anspruch 8, ferner umfassend Verarbeitungsschaltungen (50), die geeignet sind, das erste Sensorsignal und das zweite Signal zu kombinieren, um ein Signal zu liefern, das für eine relative Drehung zwischen der Hülse (23) und dem starren Schaft (21) repräsentativ ist.

10. Chirurgisches Simulationssystem, umfassend:
eine Verarbeitungseinheit (3) zum Ausführen von Simulations-Software zur Simulation eines chirurgischen Eingriffs,
eine Anzeige (4) zum Anzeigen einer Visualisierung des simulierten Eingriffs, und
eine Benutzeroberfläche (1) nach einem der vorhergehenden Ansprüche, die mit der Verarbeitungseinheit verbunden ist, um es einem Benutzer zu ermöglichen, mit der in der Anzeige visualisierten Computersimulation zu interagieren.

## Revendications

1. Dispositif d'interface utilisateur (1) pour un système de simulation d'opération chirurgicale (2), ladite interface comprenant :
un cadre (11) ayant un support (15) et une partie de suspension (16) pouvant tourner sur un premier axe (A) par rapport audit support (15),
un instrument (10) ayant une tige rigide (21) avec une extension primaire le long d'un axe longitudinal (C) non parallèle audit premier axe (A),
ladite tige (21) étant suspendue par ladite partie de suspension (16) de façon à pouvoir translater le long dudit axe longitudinal (C) par rapport à ladite partie de suspension (16), et
un premier capteur rotatif (25) agencé pour détecter la rotation de ladite partie de suspension (16) sur ledit premier axe (A) par rapport audit support (15),
**caractérisé par**
une surface de guidage (18a) agencée à une distance dudit premier axe (A), et fixée par rapport audit support (15), et
un premier rouleau (30) agencé entre ledit premier axe (A) et ladite surface de guidage (18a), ledit premier rouleau étant engagé par frottement avec ladite surface de guidage (18a) de façon à tourner lorsque ladite partie de suspension (16) est tournée sur ledit premier axe (A) par rapport audit support (15),
dans laquelle ledit premier capteur rotatif (25) est agencé pour détecter la rotation dudit premier rouleau (30), et
dans laquelle ledit support (15) comprend un couvercle (18) agencé pour couvrir ladite partie de suspension (16), dans laquelle ladite surface de guidage (18a) est formée par une surface intérieure dudit couvercle (18).

2. Interface selon la revendication 1, dans laquelle ledit premier rouleau (30) est agencé sur un premier levier (29) qui est contraint par ressort contre ladite surface de guidage (18a).

3. Interface selon l'une quelconque des revendications précédentes, comprenant en outre un second rouleau (37) engagé par frottement avec ladite tige rigide (21) de façon à tourner lorsque ladite tige rigide (21) est translatée le long dudit axe longitudinal (C) par rapport à ladite partie de suspension (16), et un second capteur rotatif (26) agencé pour détecter la rotation dudit second rouleau (37).

4. Interface selon la revendication 3, dans laquelle ledit second rouleau (30) est agencé sur un second levier (36) qui est contraint par ressort contre ladite tige rigide (21).

5. Interface selon l'une quelconque des revendications précédentes, dans laquelle ledit support (15) peut tourner sur un second axe (B) par rapport à une base fixe (12) dudit cadre (11), ledit second axe (B) étant non parallèle audit premier axe (A) de sorte que ladite tige (21) peut tourner sur ledit second axe (B).

6. Interface utilisateur selon l'une quelconque des revendications précédentes, dans laquelle ladite tige rigide (21) est fixe par rapport à ladite partie de suspension (16) par rapport à la rotation sur ledit axe longitudinal (C).

7. Interface utilisateur selon l'une quelconque des revendications précédentes, dans laquelle ledit instrument (10) est un simulateur de caméra.

8. Interface utilisateur selon la revendication 7, dans laquelle ladite interface caméra comprend :
une tige rigide (21) ayant une extension primaire le long d'un axe longitudinal (C), ladite tige rigide étant supportée en pouvant pivoter par un cadre (11), et est mobile par rapport audit cadre dans ladite direction axiale, ladite tige rigide étant fixe par rapport audit cadre par rapport à la rotation sur ledit axe longitudinal,
une poignée (20) fixée de façon rigide à ladite tige rigide (21), présentant un manchon rotateur (23) pouvant tourner sur ledit axe longitudinal par rapport à ladite tige rigide (21), et un corps de capteur (22) pouvant tourner sur ledit axe longitudinal (C) par rapport à ladite tige rigide (21) et audit manchon rotateur (23), et ledit corps de capteur (22) comprenant :
un premier capteur de rotation (40) adapté pour détecter la rotation dudit manchon de rotateur (23) par rapport audit corps de capteur (22),
un second capteur de rotation (46) adapté pour détecter la rotation dudit corps de capteur (23) par rapport à ladite tige rigide (21), et
une interface de signal (52) connectée pour recevoir un premier signal de détection dudit premier capteur de rotation (40) et pour recevoir un second signal de détection dudit second capteur de rotation (46).

9. Interface utilisateur selon la revendication 8, comprenant en outre une circuiterie de traitement (50) adaptée pour combiner ledit premier signal de capteur et ledit second signal de capteur pour fournir un signal représentant une rotation relative entre le manchon (23) et la tige rigide (21).

10. Système de simulation d'opération chirurgicale, comprenant :
une unité de traitement (3) pour exécuter un logiciel de simulation pour simuler une opération chirurgicale,
un écran (4) pour afficher une visualisation de la opération simulée, et
une interface utilisateur (1) selon l'une quelconque des revendications précédentes, reliée à ladite unité de traitement pour permettre à un utilisateur d'interagir avec la simulation par ordinateur visualisée à l'écran.
